# EUROPÄISCHE PATENTANMELDUNG

(11) **EP 1 655 079 A2**
(43) Veröffentlichungstag der Anmeldung: **10.05.2006**
(21) Anmeldenummer: 05109769.9
(22) Anmeldetag: 20.10.2005
(51) Int. Cl.: B05D 5/10, B05D 7/00, C09J 7/02, B65H 19/10

(54) **Verfahren zur Beschichtung von bahnförmigen Substraten mit mindestens zwei Klebstoffen, nach dem Verfahren hergestelltes Klebeband sowie seine Verwendung**

(30) Priorität: 04.11.2004 DE 102004053189
(71) Anmelder: tesa AG, 20253 Hamburg (DE)
(72) Erfinder: König, Sven, MI 49503, Grand Rapids (US); Bernoth, Andree, 22299, Hamburg (DE); Höppner, Robert, 21439, Marxen (DE); Hagen, Thomas, 22045, Hamburg (DE); Marquardt, Steven, 22049, Hamburg (DE); Ertas, Irfan, 22527, Hamburg (DE); Evers, Michael, 21720, Guderhandviertel (DE)
(74) Vertreter: Stubbe, Andreas

(57) **Zusammenfassung**

Die Erfindung betrifft ein Verfahren zur Beschichtung von bahnförmigen Substraten (10), wobei das Substrat (10) zumindest teilflächig mit einem ersten Klebstoff (12) beschichtet wird und nachfolgend das mit dem ersten Klebstoff (12) beschichtete Substrat (10) mit mindestens einem zweiten weiteren Klebstoff (14) zumindest teilflächig beschichtet wird.

Es ist vorgesehen, dass während der Beschichtung mit dem weiteren Klebstoff (14) der erste Klebstoff (12) noch nass oder noch nicht ausgehärtet ist.

## Beschreibung

Die Erfindung betrifft ein Verfahren zur Beschichtung von bahnförmigen Substraten mit mindestens zwei (ein oder zwei Klebstoffe aber zwei Striche überlappend oder nebeneinander) Klebstoffen, ein nach dem Verfahren hergestelltes Klebeband sowie seine Verwendung.

Selbstklebende Artikel bestehen aus mindestens zwei Schichten, nämlich einem nicht selbstklebenden Substrat (Trägerschicht) und einer auf diesem aufgetragenen druckempfindlichen Haftklebemasse. Ein doppelseitiges Selbstklebeband ist im Regelfall aus mindestens drei Schichten aufgebracht, nämlich dem Substrat und den beidseitig darauf aufgebrachten Klebstoffschichten. Daneben sind auch Produkte bekannt, die auf einer Seite des Substrats mit mehreren Klebstoffschichten, die teilweise oder vollständig einander überlappend oder auch nebeneinander auf dem Substrat aufgebracht sind. Dabei kann beispielsweise die untere von zwei Klebstoffschichten als Haftvermittler zwischen Substrat und der oben liegenden Klebstoffschicht dienen. In diesem Fall ist eine vollständige Überlappung der beiden Klebstoffschichten zweckdienlich. Es sind aber auch Klebebänder bekannt, die zwei oder mehrere nebeneinander oder nur teilweise überlappend angeordnete Klebstoffstreifen aufweisen. Aufgrund unterschiedlicher Klebeeigenschafen der verwendeten Klebstoffmaterialien ist ein solches multifunktionales Klebeband in der Lage, auf unterschiedlichen zu verklebenden Materialien zu haften. Ferner finden derartige Klebebänder Einsatz als Hilfssysteme beim so genannten Spleißen (Splicing), beim Verbinden von Endseiten zweier Materialbahnen miteinander oder zur Durchführung von fliegendem Rollenwechsel bahnförmiger Endlosmaterialien, beispielsweise in der Druckindustrie.

Gemäß allgemein üblicher Verfahren zur Herstellung von Klebebändern wird ein separat hergestelltes, bahnförmiges Substrat mit der fließ- oder streichfähigen Klebstoffmasse beschichtet. Die Beschichtung erfolgt dabei zumeist aus einer Lösung heraus, wofür die Haftklebemasse vor der Beschichtung unter Zuhilfenahme von Lösungsmitteln in eine streichfähige Konsistenz überführt wird. Die Beschichtung kann aber auch - abhängig von der Klebstoffzusammensetzung - aus der Schmelze heraus lösungsmittelfrei im Extrusionsverfahren erfolgen. Dieses Verfahren hat sich besonders bei Haftklebestoffen auf Basis von thermoplastischen Elastomeren durchgesetzt. Ferner kann der Verbund aus Substrat und Haftklebemasse auch dadurch hergestellt werden, dass die Haftklebemasse zunächst auf ein dehäsives Medium aufgetragen wird und dort einen Film ausbildet und der Klebstofffilm im Anschluss daran im Kaschierverfahren auf den Träger aufgebracht wird.

Alle genannten Verfahren kommen auch zur Herstellung von Klebebändern mit mehreren Klebstoffschichten zum Einsatz. Erfolgt die Herstellung aus der Lösung oder Schmelze heraus, werden die Beschichtungen nacheinander vorgenommen, nachdem die jeweils untere Klebstoffschicht getrocknet beziehungsweise ausgehärtet ist. Aufgrund der Vielzahl der erforderlichen Arbeitsschritte ist dieses Vorgehen aufwändig und kostenintensiv. Die Mehrfachbeschichtung im Kaschierverfahren weist das Problem einer geringen Maßgenauigkeit auf, wenn ein Klebstoffstrich auf einen vorhergegangenen aufgebracht wird.

Aufgabe der vorliegenden Erfindung ist daher, ein einfaches und kostengünstiges Verfahren zur Herstellung von Klebebändern mit mehreren Klebstoffschichten bereitzustellen.

Diese Aufgabe wird durch ein Verfahren mit den Merkmalen des Anspruchs 1 gelöst. Dadurch, dass das bahnförmige Substrat zunächst zumindest teilflächig mit einem ersten Klebstoff beschichtet wird und nachfolgend mit einem weiteren Klebstoff zumindest teilflächig beschichtet wird, während der erste Klebstoff noch nass beziehungsweise noch nicht ausgehärtet ist, lässt sich das Verfahren mit einer geringst möglichen Anzahl von Verfahrensstufen durchführen. Die einzelnen Beschichtungsvorgänge können quasi in einem Arbeitsgang erfolgen, ohne dass ansonsten erforderliche Trocknungs- oder Aushärtungsstufen zwischengeschaltet werden müssen. Besondere Vorteile ergeben sich ferner im Falle einer teilweisen oder vollständigen Übereinanderschichtung der Klebstoffe. Hier findet nämlich eine teilweise Diffusion der Schichten ineinander statt, so dass eine wesentlich bessere Verankerung der Klebstoffmassen miteinander entsteht, wenn diese auf der Bahn vernetzt werden. Die unmittelbar aufeinander folgende Auftragung der Klebstoffe lässt sich zudem mit einer hohen Maßgenauigkeit bezüglich der Aufbringungsstelle auf dem Substrat beziehungsweise auf der zuvor aufgebrachten Klebstoffschicht durchführen.

In dem Verfahren können die einzelnen Klebstoffschichten, die aus gleichen oder unterschiedlichen Klebstoffzusammensetzungen bestehen können, teilweise oder vollständig einander überlappend oder auch nebeneinander (nicht überlappend) auf dem Substrat aufgeschichtet werden. ferner kann das Substrat ein- oder beidseitig beschichtet werden, wobei die einzelnen Seiten jeweils teil- oder vollflächig mit den mindestens zwei Klebstoffen beschichtet werden können.

Die einzelnen Klebstoffe werden vorzugsweise in bekannter Weise aus einer Lösung unter Zusatz von Lösungsmitteln oder aus einer Schmelze unter thermischer Erwärmung im Extrusionsverfahren auf das Substrat aufgebracht. In Abhängigkeit von der Art des Verfahrens und den verwendeten Klebstoffen kommen hier übliche Beschichtungsmethoden, beispielsweise Aufstreichen, Extrudieren, Aufsprühen, Aufwalzen und/oder Rakeln in Frage. Die genannten Verfahren und Methoden können auch miteinander kombiniert werden. So ist es beispielsweise möglich, den ersten Klebstoff als Lösung aufzusprühen und den zweiten Klebstoff als Schmelze oder auch in umgekehrter Reihenfolge mittels Walzen oder Rakeln auf das Substrat aufzutragen.

Als Basispolymere der Klebstoffschicht sind unter anderem Natur- und Synthesekautschuke, Polyacrylate, Blockcopolymere mit Polystyrolblockanteilen, Polyethylenvinylacetate und Polyurethane bekannt. Sie werden meist in Kombination mit Zusätzen wie Harzen und Weichmachern und/oder sonstigen Hilfsstoffen, beispielsweise Antioxidantien, UV-Schutzmitteln oder rheologischen Additiven und auch Füllstoffen eingesetzt. In Kombination mit dem eingesetzten Substrat bestimmt der Klebstoff maßgeblich die Haftklebeeigenschaften des selbstklebenden Artikels, wie Klebkraft, Aufziehverhalten, Wiederablösbarkeit und weiteren.

Als nicht klebende Substratmaterialien kommen alle bahnförmigen Materialien in Frage, beispielsweise Papiere, Gewebe, Vliese, Kunststofffolien oder Elastomere, jeweils in unterschiedlichen Dicken, Strukturen und Polymerzusammensetzungen.

Nach einer besonders bevorzugten Ausführungsform der Erfindung ist vorgesehen, dass nach der Beschichtung des Substrats mit den Klebstoffen mindestens eine, die Klebstoffe abdeckende Trennmaterialschicht aufgebracht wird. Derartige Trennmaterialschichten, die typischerweise aus PE oder silikonbeschichtetem Kunststoff oder Papier bestehen, werden vor dem bestimmungsgemäßen Klebeeinsatz des Klebebandes entfernt und dienen dem Schutz der Klebstoffschicht und dem Verhindern eines ungewollten Verklebens. In diesem Zusammenhang ist besonders bevorzugt vorgesehen, die mindestens zwei Klebstoffstreifen nebeneinander oder teilweise überlappend auf dem Substrat aufzutragen und mit jeweils einer, den entsprechenden Klebstoffstreifen bedeckenden Trennmaterialschicht zu versehen. Dabei kann es sich auch um eine einzige, durch eine Perforationsnaht gegliederte Trennmaterialschicht handeln.

Die Erfindung betrifft ferner ein nach dem erfindungsgemäßen Verfahren hergestelltes Klebeband, das ein bahnförmiges Substrat und mindestens zwei einander vollständig, teilweise oder nicht überlappend auf dem Substrat angeordnete Klebstoffstreifen aufweist. Das Klebeband weist nach einer bevorzugten Ausgestaltung mindestens eine, die mindestens zwei Klebstoffstreifen abdeckende Trennmaterialschicht auf, wobei vorzugsweise im Falle nebeneinander angeordneter oder teilweise überlappender Klebstoffstreifen diese von jeweils einer Trennmaterialschicht abgedeckt sind.

Derartige Klebebänder können besonders vorteilhaft als Spleißsystem zum Verbinden von Endseiten von Materialbahnen, insbesondere zur Durchführung von fliegenden Rollenwechseln bahnförmiger Endlosmaterialien verwendet werden.

Weitere vorteilhafte Ausgestaltungen der Erfindung sind Gegenstand der übrigen Unteransprüche.

Die Erfindung wird nachfolgend in Ausführungsbeispielen anhand der zugehörigen Zeichnungen näher erläutert. Es zeigen:
- Figur 1: eine Beschichtungsanlage zur Durchführung des erfindungsgemäßen Verfahrens nach einer ersten Ausführungsform unter Aufsprühen der Klebstoffe;
- Figur 2: eine Beschichtungsanlage zur Durchführung des erfindungsgemäßen Verfahrens gemäß einer zweiten Ausführungsform unter Aufwalzen der Klebstoffe;
- Figur 3: eine Beschichtungsanlage zur Durchführung des erfindungsgemäßen Verfahrens nach einer dritten Ausführungsform unter Aufrakeln der Klebstoffe;
- Figur 4: ein erfindungsgemäß hergestelltes Klebeband in einer Querschnittansicht und
- Figur 5: ein erfindungsgemäß hergestelltes Klebeband in einer Draufsicht.

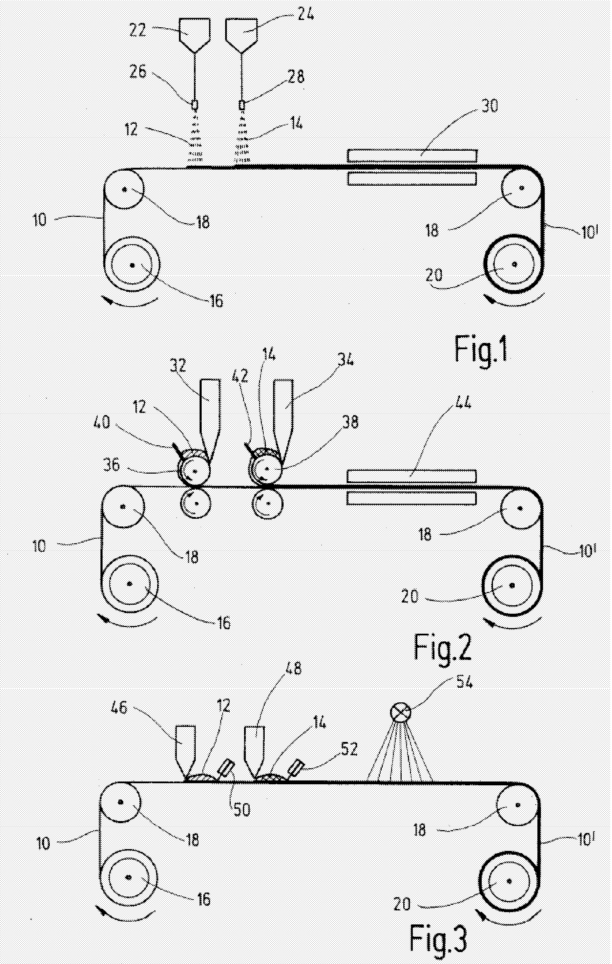

Figur 1 zeigt schematisch eine Anlage, bei der ein bahnförmiges Substrat 10 nacheinander mit einem ersten Klebstoff 12 und einem zweiten Klebstoff 14 im Sprühverfahren beschichtet wird. Die zulaufende, noch unbeschichtete Substratbahn 10 ist auf einer rotierbar gelagerten Ballenabwicklung 16 aufgewickelt. Von zwei Umlenkrollen 18 geführt durchläuft sie die Beschichtungsstation und wird als beschichtetes Substrat 10' von der Produktaufwicklung 20 aufgenommen. Die Förderung des Substrats 10 erfolgt typischerweise durch einen nicht dargestellten Elektromotor, der beispielsweise die Produktaufwicklung 20 antreibt.

Gemäß der dargestellten Ausführungsform erfolgt die Beschichtung mit den Klebstoffen 12 und 14 durch Aufsprühen ihrer Lösungen. Hierfür liegen die Klebstoffe 12 und 14 in einem geeigneten Lösungsmittel, das ein organisches Lösungsmittel oder Wasser sein kann, gelöst vor. Die entsprechenden Lösungen befinden sich jeweils in einem Behälter 22 beziehungsweise 24, der über eine Leitung mit einer Düse 26 beziehungsweise 28 in Verbindung steht. Die Düsen 26, 28 sind vorzugsweise als Düsen entsprechend einer gewünschten Auftragsbreite des jeweiligen Klebstoffs 12, 14 ausgestaltet. Ferner kann das gewünschte Sprühprofil durch unterhalb der Düsen 26, 28 angeordnete, hier nicht dargestellte Blenden begrenzt werden.

Die unmittelbar hintereinander geschalteten Sprühstationen für die Klebstoffe 12 und 14 bewirken, dass ein Auftrag des zweiten Klebstoffs 14 erfolgt, wenn der erste Klebstoff 12 noch nicht getrocknet ist. Die Trocknung und gegebenenfalls die Polymerisation / Vernetzung der beiden Klebstoffe 12 und 14 erfolgt vielmehr erst in einem nachgeschalteten Wärmekanal 30, den das beschichtete Substrat 10' durchläuft. Gegebenenfalls kann hier auch die Polymerisation der Klebstoffmonomere erfolgen. Oder es erfolgt eine Elektronenstrahlvernetzung.

Figur 2 stellt die Beschichtung des Substrats 10 mit den beiden Klebstoffen 12 und 14 aus der Schmelze dar. Dabei bezeichnen gleiche Bezugszeichen die gleichen Elemente wie in Figur 1 und werden im Einzelnen nicht nochmals erläutert. Bei diesem Verfahren werden die Klebstoffe 12 und 14 in voneinander getrennten und hier nicht dargestellten Extrudern in bekannter Weise zu streichfähigen Formmassen aufgeschmolzen und homogenisiert. Die heißen Klebstoffmassen 12 und 14 werden durch entsprechende Extruderdüsen 32 (Extrusionsbreitsschlitzdüsen zur Beschichtung bahnförmiger Materialien) und 34 auf die hintereinander geschalteten Walzenwerke 36 und 38 aufgetragen, wobei auch ein Auftrag vermittels Direktextrusion auf das bahnförmige Material möglich ist. Ein gleichmäßiges Verstreichen der Klebstoffmassen 12 und 14 auf den entsprechenden Walzen 36 und 38 erfolgt durch die Rakeln 40 und 42, die mit wählbarem Abstand zum Substrat 10 stellbar sind. Das durch Abkühlung erfolgende Aushärten der auf das Substrat 10 aufgetragenen Klebstoffe 12 und 14 erfolgt spontan oder kann - wie dargestellt - durch einen nachgeschalteten Kältekanal 44 beschleunigt werden.

Alternativ zu der in Figur 2 gezeigten Ausführung können die Schmelzen (oder Lösungen) auch direkt ohne Walzen auf das Substrat 10 aufgebracht und dort mit Rakeln verteilt werden. Ebenfalls sind Anlagen bekannt, bei denen die Schmelzen (oder Lösungen) über ein aus mehreren Walzen bestehendes Walzenwerk übertragen und auf das Substrat 10 aufgewälzt werden.

Gemäß Figur 3 erfolgt die Beschichtung des Substrats 10 mit den Klebstoffen 12 und 14 aus den entsprechenden Lösungen heraus, die sich in den Behältern 46 beziehungsweise 48 befinden. Dabei werden die streichfähigen Lösungen der Klebstoffe 12 und 14 über entsprechende Düsen der Behälter 46 und 48 nacheinander auf das Substrat 10 aufgetragen und mittels zwei beabstandet zum Substrat 10 angeordneten Rakeleinrichtungen 50 und 52 als gleichmäßige Schichten auf dem Substrat 10 verteilt. Die Polymerisation der Klebstoffmonomere wird beispielsweise durch UV-Strahlung initiiert, die von einer nachgeschalteten UV-Strahlungsquelle 54 erzeugt wird.

In den in den Figuren 1 bis 3 gezeigten Beschichtungsanlagen ist jeweils ein einheitliches Auftragungsverfahren für die Klebstoffe 12 und 14 gewählt. Selbstverständlich können die unterschiedlichen Verfahren auch miteinander kombiniert werden. Beispielsweise kann der erste Klebstoff 12 durch Aufsprühen aus der Lösung auf das Substrat 10 aufgebracht werden und der zweite Klebstoff 14 mittels der in Figur 3 gezeigten Rakeltechnik.

Ferner kann in der gleichen Produktionsstufe nach der Auftragung des zweiten Klebstoffs 14 eine Beschichtung der Klebstoffseite mit einem Trennmaterial erfolgen.

In allen gezeigten Ausführungsbeispielen sind die beiden Beschichtungsstationen für die zwei Klebstoffe 12 und 14 so dicht hintereinander geschaltet, dass die Auftragung des zweiten Klebstoffs 14 auf den noch nicht getrockneten, nicht ausgehärteten beziehungsweise nicht polymerisierten ersten Klebstoff 12 "nass in nass" erfolgt. Hierdurch wird eine sowohl zeitliche als auch örtliche Konzentrierung des Beschichtungsverfahrens mit erheblichen Kosteneinsparungen erzielt. Die Aushärtung der Klebstoffschichten 12 und 14 kann jeweils in einer einheitlichen Station 30, 44 oder 54 erfolgen. Im Falle teilweise oder vollständiger Überlappung der beiden Klebstoffschichten 12 und 14 wird ferner eine verbesserte Verankerung der Klebstoffe miteinander bewirkt.

Lösungsmittelhaltige Klebemassen sollten niemals unter Schmelzen oder allg. lösungsmittelfreie Systeme gebracht werden, da diese Klebemassen nicht trocknen. Umgekehrt können untere Schichten mit Elektronenstrahlen, thermisch oder UV - mit UV einseitig nur bis zu einer Schichtdicke von etwa 1 mm - härten.

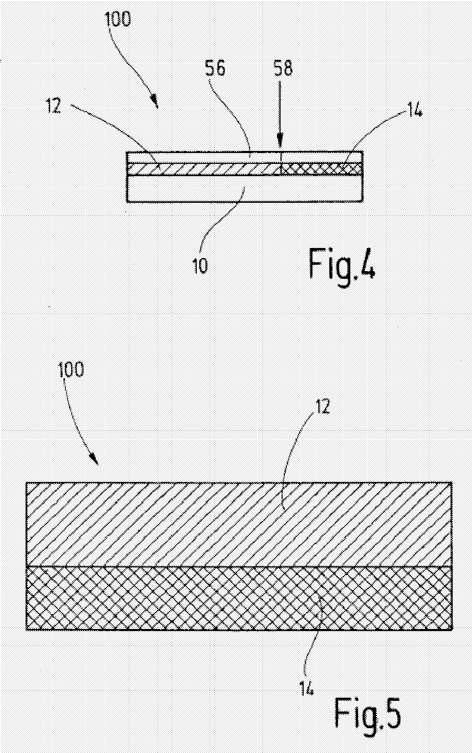

Figur 4 zeigt ein Beispiel eines mit dem erfindungsgemäßen Verfahren hergestellten Klebebands 100 in einer Querschnittansicht entlang der Materialbreite (Materialstärken stark vergrößert dargestellt). Dabei befinden sich auf dem Substrat 10 nebeneinander angeordnet die erste Klebstoffschicht 12 und die zweite Klebstoffschicht 14. Zudem sind die Klebstoffschichten 12 und 14 durch eine abziehbare Trennmaterialschicht 56 bedeckt. Entlang der Grenzfläche zwischen den Klebstoffschichten 12 und 14 weist das Trennmaterial 56 eine Perforationsnaht 58 auf, die ein separates Entfernen der Trennmaterialstreifen erlaubt. Alternativ können auch zwei Klebstoff-individuelle Trennmaterialstreifen vorgesehen sein.

Eine Draufsicht des Klebebands 100 nach Entfernen der Trennmaterialschicht 56 zeigt Figur 5.

Das in den Figuren 4 und 5 dargestellte Produkt 100 kann besonders vorteilhaft zum Spleißen von bahnförmigen Materialien, beispielsweise in der Druckindustrie, verwendet werden.

### Bezugszeichen

- 100: Klebeband
- 10: Substrat
- 10': beschichtetes Substrat
- 12: erster Klebstoff
- 14: zweiter Klebstoff
- 16: Ballenabwicklung
- 18: Umlenkrolle
- 20: Produktaufwicklung
- 22, 24: Behälter
- 26,28: Düse
- 30: Wärmekanal
- 32, 34: Extruderdüse
- 36, 38: Walzenwerk
- 40, 42: Rakel
- 44: Kältekanal
- 46, 48: Behälter
- 50, 52: Rakeleinrichtung
- 54: UV-Strahlungsquelle
- 56: Trennmaterialschicht
- 58: Perforationsnaht

## Patentansprüche

1. Verfahren zur Beschichtung von bahnförmigen Substraten (10), wobei das Substrat (10) zumindest teilflächig mit einem ersten Klebstoff (12) beschichtet wird und nachfolgend das mit dem ersten Klebstoff (12) beschichtete Substrat (10) mit mindestens einem weiteren zweiten Klebstoff (14) zumindest teilflächig beschichtet wird, **dadurch gekennzeichnet, dass** während der Beschichtung mit dem weiteren Klebstoff (14) der erste Klebstoff (12) noch nass oder noch nicht ausgehärtet ist.

2. Verfahren nach Anspruch 1, **dadurch gekennzeichnet, dass** der erste Klebstoff (12) und/oder der mindestens eine weitere Klebstoff (14) einander teilweise oder vollständig überlappend oder nebeneinander auf das Substrat (10) aufgebracht wird/werden.

3. Verfahren nach Anspruch 1 oder 2, **dadurch gekennzeichnet, dass** das Substrat (10) ein oder beidseitig, jeweils teil- oder vollflächig beschichtet wird.

4. Verfahren nach einem der vorhergehenden Ansprüche, **dadurch gekennzeichnet, dass** der erste Klebstoff (12) und/oder der mindestens eine weitere Klebstoff (14) als Lösung oder als Schmelze auf das Substrat (10) aufgebracht wird/werden.

5. Verfahren nach einem der vorhergehenden Ansprüche, **dadurch gekennzeichnet, dass** der erste Klebstoff (12) und/oder der mindestens eine weitere Klebstoff (14) durch Aufstreichen, Aufsprühen, Extrusion, Gießen, Aufwalzen und/oder Rakeln auf das Substrat (10) aufgebracht und verteilt wird.

6. Verfahren nach einem der vorhergehenden Ansprüche, **dadurch gekennzeichnet, dass** der erste Klebstoff (12) und/oder der mindestens eine weitere Klebstoff (14) aus gleichen oder unterschiedlichen Klebstoffzusammensetzungen bestehen.

7. Verfahren nach einem der vorhergehenden Ansprüche, **dadurch gekennzeichnet, dass** nach der Beschichtung des Substrats (10) mit dem ersten Klebstoff (12) und dem mindestens einen weiteren Klebstoff (14) mindestens eine, zumindest einen der Klebstoffe (12, 14) abdeckende Trennmaterialschicht (56) aufgebracht wird.

8. Verfahren nach Anspruch 7, **dadurch gekennzeichnet, dass** die mindestens zwei Klebstoffe (12, 14) nebeneinander oder teilweise überlappend auf dem Substrat (10) aufgebracht werden und jeweils von einer Trennmaterialschicht (56) abgedeckt werden.

9. Klebeband (100) hergestellt nach einem der Ansprüche 1 bis 8 mit einem bahnförmigen Substrat (10) und mindestens zwei einander vollständig, teilweise oder nicht überlappend auf dem Substrat (10) angeordneten Klebstoffschichten (12, 14).

10. Klebeband (100) nach Anspruch 9, **dadurch gekennzeichnet, dass** mindestens eine, die mindestens zwei Klebstoffschichten (12, 14) abdeckende Trennmaterialschicht (56) vorhanden ist.

11. Klebeband (100) nach Anspruch 10, **dadurch gekennzeichnet, dass** die mindestens zwei Klebstoffschichten (12, 14) nebeneinander oder teilweise überlappend auf dem Substrat (10) angeordnet sind und jeweils von einer Trennmaterialschicht (56) abgedeckt sind.

12. Verwendung eines nach einem der Ansprüche 1 bis 8 hergestellten Klebebands (100) als Spleißsystem zum Verbinden von Endseiten von Materialbahnen oder zur Durchführung von fliegenden Rollenwechseln von bahnförmigen Endlosmaterialien.
